# FASCICULE DE BREVET EUROPEEN

(11) **EP 3 166 159 B1**
(45) Date de publication et mention de la délivrance du brevet: **01.01.2020**
(21) Numéro de dépôt: 16306463.7
(22) Date de dépôt: 08.11.2016
(51) Int. Cl.: H01M 2/10, A01D 34/00, A47L 9/28, H01R 13/24, H01R 13/62, H01R 13/642

(54) **SYSTÈME DE CHARGEMENT ÉLECTRIQUE D'UN ENGIN AUTONOME**
SYSTEM ZUR ELEKTRISCHEN AUFLADUNG EINER EIGENSTÄNDIGEN MASCHINE
ELECTRIC CHARGING SYSTEM FOR AN AUTONOMOUS VEHICLE

(30) Priorité: 09.11.2015 FR 1560716; 09.11.2015 FR 1560705; 09.11.2015 FR 1560703
(43) Date de publication de la demande: 10.05.2017
(73) Titulaire: ETESIA (Société par actions simplifiée), 67160 Wissembourg (FR)
(72) Inventeur: WOLF, Pierre, 67160 ROTT (FR); TREGER, Claude, 67250 HUNSPACH (FR); DELCASSO, Laurent, 34130 Lansargues (FR)
(74) Mandataire: Nuss, Laurent

(56) Documents cités:
- EP-A2- 1 430 826
- WO-A1-2015/108454
- WO-A1-2015/122040
- US-A1- 2013 076 304
- US-A1- 2013 211 646
- US-A1- 2014 327 389

## Description

La présente invention concerne le domaine des équipements pour l'alimentation électrique d'appareils, en particulier l'alimentation en milieu extérieur d'engins électriques autonomes, tels que des robots de traitement de sol ou de tonte, voire des véhicules motorisés pilotés par un utilisateur.

Plus précisément, l'invention a pour objet un système de chargement électrique d'un engin autonome, un système de traitement automatisé du sol comprenant au moins un tel système de chargement et une borne de chargement faisant partie dudit système.

De nombreux systèmes de chargement d'engins électriques comportant des moyens de stockage embarqués sont déjà connus, en particulier depuis des bornes ou des stations dédiées.

Dans le cas des engins autonomes, ces derniers doivent, en cas d'atteinte d'un niveau de chargement correspondant à un niveau seuil bas, repérer la station ou la borne la plus proche, puis s'en approcher et, enfin, établir la connexion électrique pour que le chargement puisse s'effectuer.

Pour l'établissement de la connexion électrique, un positionnement relatif précis de l'engin mobile par rapport à la station ou à la borne fixe est absolument nécessaire, en particulier durant la dernière phase de l'approche juste avant l'établissement de la connexion.

L'engin doit, par conséquent, se rapprocher du site de connexion de la station ou de la borne selon une direction précise déterminée et en étant exactement calé à la fois horizontalement et verticalement par rapport audit site pour que leur positionnement relatif puisse aboutir au raccordement recherché, souvent doublé d'un emboîtement mécanique.

Ces solutions connues présentent des inconvénients notables, parmi lesquels : notamment la nécessité de réaliser des manœuvres d'approche longues et fastidieuses, un taux relativement élevé d'échecs ou de mauvaises connexions, des contraintes en termes d'implantations des bornes et stations (espace dégagé en face du site de raccordement), l'alimentation d'un seul engin à la fois seulement (pour un dispositif de faible encombrement).

Ces inconvénients se retrouvent à la fois dans les solutions de rechargement par contact et, dans une moindre mesure, dans les solutions sans contact (par champ magnétique, par radiofréquence, etc...).

Toutefois, dans ce dernier type de chargement les pertes sont importantes, les puissances transmissibles limitées et l'équipement nécessaire coûteux.

Par le document EP-A-1430826, on connaît un système de chargement d'un robot autonome selon le préambule de la revendication 1.

Toutefois, cette borne, installée dans ou contre un mur, ne présente qu'un accès d'envergure limitée, de moins de 180°, compte tenu de sa forme, de son installation et de l'encombrement extérieur du robot.

Le but de la présente invention est de surmonter au moins les principaux inconvénients précités.

A cet effet, l'invention a pour objet un système de chargement électrique d'un engin autonome, en particulier d'un robot mobile de traitement automatisé du sol, tel qu'un robot de tonte, selon le préambule de la revendication 1, ce système étant caractérisé en ce que la ou chaque borne de chargement comporte une enveloppe ou un boîtier de protection présentant, au moins au niveau de la région de la première paire de terminaux, une forme extérieure de révolution, en ce que chacun des terminaux de la première paire présente une forme extérieure sensiblement circulaire et s'étend circonférentiellement en étant proéminent, affleurant ou en retrait par rapport à la surface extérieure de ladite enveloppe ou dudit boîtier, pour une accessibilité sur 360°, et en ce que la seconde paire de terminaux d'alimentation est montée, préférentiellement de manière apparente et accessible directement de l'extérieur, dans le capot ou la coque d'habillage de l'engin.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue schématique en coupe selon un plan vertical d'une borne de chargement faisant partie du système selon l'invention ;
la figure 2 est une vue selon A-A (plan contenant le terminal annulaire supérieur de la première paire de la borne) de l'objet représenté figure 1 ;
la figure 3 est une vue schématique partielle en coupe de la borne de la figure 1 et de la partie avant d'un engin autonome en cours de rechargement, illustrant le système de chargement selon une première variante de réalisation de l'invention ;
la figure 4 est une vue en coupe selon B-B du capot de l'engin représenté figure 3 ;
la figure 5 est une vue similaire à celle de la figure 3 d'une autre variante de réalisation de l'invention, et,
la figure 6 est une représentation schématique de dessus d'un système de traitement automatique ou automatisé du sol, mis en œuvre in situ avec délimitation d'une zone à traiter (jardin gazonné comportant des obstacles et des régions à ne pas traiter).

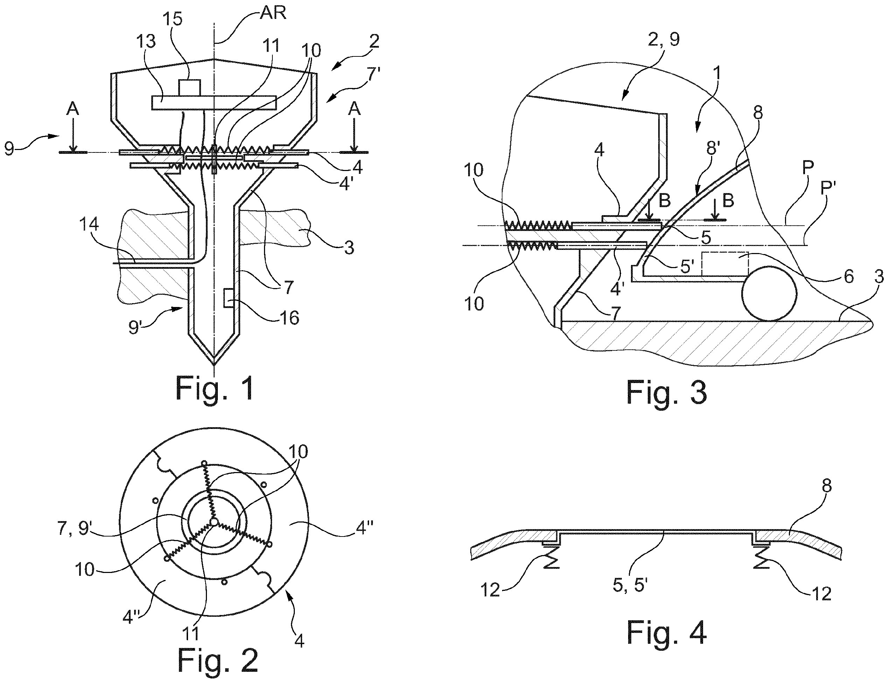

Les figures 1 à 5 illustrent chacune, en partie au moins, un système de chargement d'un engin 1 autonome, notamment d'un robot de tonte.

Ce système comprend, d'une part, au moins une borne de chargement 2 fixe par rapport au sol 3, et pourvue d'une première paire de terminaux d'alimentation 4, 4' aptes et destinés à délivrer de l'énergie électrique avec un courant et une tension compatibles avec l'engin 1 à charger et, d'autre part, une seconde paire de terminaux d'alimentation 5, 5' faisant partie de l'engin 1, reliés directement ou non à un moyen 6 de stockage d'énergie électrique embarqué de ce dernier et arrangés selon une disposition coïncidant avec celle de la première paire de terminaux 4, 4', le transfert d'énergie électrique s'effectuant par double contact entre les terminaux respectivement correspondants 4 et 5 ; 4' et 5' des deux paires lorsque l'engin 1 s'est positionné de manière adéquate par rapport à la borne 2 concernée.

Conformément à l'invention, la ou chaque borne de chargement 2 comporte une enveloppe ou un boîtier de protection 7 présentant, au moins au niveau de la région de la première paire de terminaux 4, 4', une forme extérieure de révolution. De plus, chacun des terminaux 4 et 4' de la première paire présente une forme extérieure sensiblement circulaire et s'étend circonférentiellement en étant proéminent, affleurant ou en retrait par rapport à la surface extérieure de ladite enveloppe ou dudit boîtier 7, pour une accessibilité sur 360°. Et enfin, la seconde paire de terminaux d'alimentation 5, 5' est montée, préférentiellement de manière apparente et accessible directement de l'extérieur, dans le capot ou la coque d'habillage 8 de l'engin 1.

Ainsi, l'invention fournit un site de chargement (borne 2) accessible dans des conditions identiques de tous les côtés, plus précisément sur 360°. Par conséquent, il n'existe plus de direction obligatoire d'approche et, en fonction de l'espacement mutuel et de la disposition des terminaux 4, 4' de la première paire et de l'étendue des terminaux 5, 5' de la seconde paire, aucun positionnement particulier de l'engin 1 par rapport à la borne 2 n'est requis pour réaliser le chargement, la seule condition demeurant l'établissement du double contact entre les terminaux.

Pour faciliter d'avantage encore ce dernier, rattraper ou compenser d'éventuelles inégalités ou approximations dans le positionnement relatif, absorber d'éventuels chocs lors du contact physique et maintenir un contact avec appui sous pression entre les terminaux opposés durant toute la phase de chargement, il est avantageusement prévu, comme le montrent notamment les figures 1, 2 et 4, que les terminaux 4, 4' ; 5, 5' de la première et/ou de la seconde paire(s) sont montés sous sollicitation élastique, de manière à autoriser notamment un déplacement relatif entre les deux terminaux 4 et 4' ; 5 et 5' d'une même paire et garantir l'établissement d'un double contact avec les terminaux de l'autre paire en vue du chargement.

Bien que diverses variantes structurelles soient possibles, avec par exemple un positionnement des terminaux des deux paires sur des portions d'enveloppe 7 ou de capot 8 saillantes, la figure 3 montre une réalisation préférée dans laquelle les profils extérieurs, d'une part, de l'enveloppe ou du boîtier de protection 7 de la ou chaque borne de chargement 2 et, d'autre part, du capot ou de la coque d'habillage 8 de l'engin 1 présentent, au moins au niveau de leurs zones ou régions pourvues des terminaux 4, 4' ; 5, 5', des formes sensiblement mutuellement conjuguées ou assorties par complémentarité, autorisant un rapprochement suffisant, par approche latérale de l'engin 1 roulant sur le sol 3 et s'autoguidant par rapport à la borne 2, entre la borne 2 considérée et l'engin 1 pour permettre l'établissement du double contact entre les terminaux 4, 4' ; 5, 5' des deux paires.

En accord avec une construction pratique préférée de la borne de chargement 2, ressortant de la figure 1, la partie 9 de l'enveloppe ou du boîtier de protection 7 de la ou chaque borne de chargement 2 recevant la première paire de terminaux 4, 4' présente une configuration extérieure effilée vers le bas, avec préférentiellement un bord supérieur 7' en surplomb par rapport auxdits terminaux 4, 4' et le terminal inférieur 4' est situé en retrait par rapport au terminal supérieur 4.

Conformément à une caractéristique avantageuse de l'invention, illustrée conjointement sur les figures 1, 2, 4 et 5 des dessins, chaque terminal 4, 4' de la première paire de terminaux 4 et 4' consiste en une pièce annulaire, préférentiellement du type rondelle métallique plate, en une ou plusieurs parties 4", et chaque terminal 4, 4' de cette première paire est monté avec un maintien centré par rapport à l'axe de révolution AR de l'enveloppe ou du boîtier 7 sous l'action de moyens élastiques 10, par exemple de trois ressorts de traction ou de compression, reliant chaque terminal 4, 4' à un élément central fixe 11 avec faculté de déplacement dans un plan horizontal ou plan P, P' de la pièce annulaire considérée 4, 4'.

Le boîtier de protection 7 formant l'enveloppe extérieure de la borne 2, par exemple en un matériau thermoplastique rigide, comporte avantageusement des logements radiaux en forme de fentes, recevant avec possibilité de déplacement coulissant guidé (par décentrage), les pièces en forme de disques évidés ou de lamelles annulaires faisant office de terminaux 4 et 4'. L'élément central 11 présente avantageusement une faible section pour permettre l'utilisation de ressorts 10 de grande longueur et est maintenu rigidement dans l'enveloppe 7 par des ponts de matière.

Les premiers terminaux 4, 4' peuvent également consister chacun en une bande conductrice montée affleurante ou en retrait par rapport à l'enveloppe 7, avec support élastique ou non.

Selon une autre caractéristique de l'invention, ressortant à titre d'exemple des figures 3, 4 et 5, chaque terminal 3, 3' de la seconde paire de terminaux 5, 5' consiste en une bande métallique montée sensiblement affleurante, proéminente ou en retrait par rapport à la surface extérieure 8' du capot ou de la coque d'habillage 8 de l'engin 1, préférentiellement avec réalisation d'une étanchéité à l'eau et éventuellement avec faculté de rétraction ou d'enfoncement à l'encontre d'une sollicitation élastique, par exemple fournie par des ressorts de compression 12, un moyen de recouvrement extérieur escamotable étant le cas échéant prévu.

L'étanchéité au niveau des seconds terminaux 5, 5' peut être obtenue, par exemple, par une structure en soufflet déformable reliant les bandes 5, 5' au capot 8.

En variante, lorsque les terminaux 4 et 4' de la première paire sont montés élastiquement dans la borne 2, les terminaux 5 et 5' peuvent quant à eux être montés rigidement dans le capot 8.

Les bandes métalliques 5, 5' peuvent présenter une extension horizontale s'étendant éventuellement sur un côté entier de la coque d'habillage 8, voire même chacune en plusieurs portions sur plusieurs côtés.

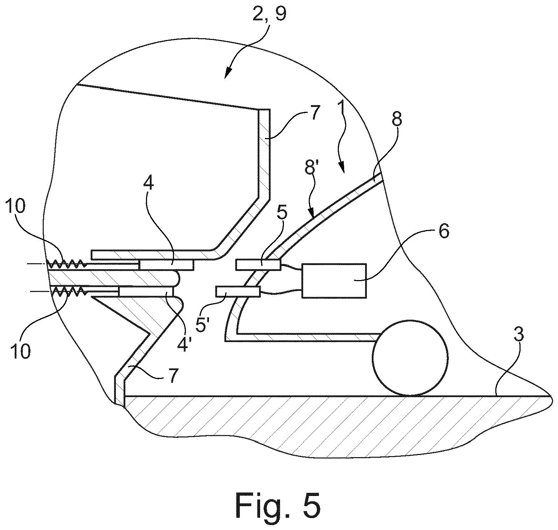

Comme cela ressort d'une comparaison entre les figures 3, 4 et 5, l'homme du métier comprend que deux variantes constructives sont possibles, avec chacune deux sous-variantes :
- soit les premiers terminaux 4, 4' sont montés proéminents (figure 3) et alors les seconds terminaux 5, 5' peuvent être montés en affleurement (figures 3 et 4) ou en retrait (non représenté) ;
- soit les seconds terminaux 5, 5' sont montés proéminents (figure 5) et alors les premiers terminaux 4, 4' peuvent être montés en affleurement (non représenté) ou en retrait (figure 5).

Les terminaux en affleurement présentent avantageusement une surface apparente de possible contact plus importante (notamment en hauteur, c'est-à-dire en largeur de chaque bande) que les terminaux proéminents. Les terminaux montés en retrait sont disposés dans des logements dont les ouvertures vers l'extérieur présentent avantageusement une forme évasée (figure 5), pour faciliter l'introduction des terminaux proéminents de l'autre paire (fonction de centrage).

Comme le montre la figure 1, et conformément à une variante constructive préférée autorisant une mise en oeuvre en pleine terre (gazon, champ, potager, ....), l'enveloppe ou le boîtier de protection 7 de la ou chaque borne 2 comprend une partie supérieure 9 comportant la première paire de terminaux 4, 4' et un module électronique 13 de gestion de l'alimentation et une partie inférieure 9' destinée à être enfoncée dans le sol 3 et se terminant avantageusement en pointe, ledit module électronique 13 de la borne 2 considérée étant relié au réseau ou à un module transformateur par une ligne d'alimentation 14, préférentiellement enterrée et passant par la partie inférieure 9' plantée dans le sol 3.

La borne 2 peut éventuellement comporter, en plus de moyens convertisseurs, des moyens de stockage intermédiaire d'électricité du type accumulateur rechargeable relié à la ligne 14 et alimentant les terminaux 4, 4', de manière à ne nécessiter qu'une alimentation par intervalles par la ligne 14.

De plus, la partie supérieure exposée du boîtier 7 de la borne 2 peut comporter des cellules photovoltaïques.

Selon une autre caractéristique de l'invention, la ou chaque borne de chargement 2 intègre des moyens d'émission et de réception radio 15, aptes et destinés à établir une communication bidirectionnelle entre la borne 2 concernée, d'une part, et l'engin 1, au moins une autre borne et/ou un outil portatif de géolocalisation, équipé(e) de moyens complémentaires, d'autre part.

Le module de gestion 13, associé aux moyens radio 15, peut assurer notamment un guidage actif de l'engin 1, ou au moins constituer un repère de guidage pour ce dernier, et l'identifier lorsqu'il est proche et avant sa connexion, pour éventuellement adapter l'alimentation en fonction du type ou de la capacité de l'engin 1. La borne de chargement 2 peut alors également constituer éventuellement un moyen de délimitation du périmètre de la zone à traiter, à l'image de la borne active de la demande de brevet français déposée le 9 novembre 2015 au nom de la demanderesse sous le n° 1560705.

Ainsi, de manière avantageuse, les moyens d'émission et de réception radio 15 peuvent comprendre des moyens de diffusion de signaux sur une portée limitée, dont la simple détection par l'engin mobile autonome 1 ou leur éventuelle interprétation après réception par ce dernier, indique audit engin 1 une zone fractionnaire à traiter prioritairement, à traiter de manière particulière, à éviter, interdite d'accès ou ne devant pas être traitée.

Enfin, il peut également être prévu que la ou chaque borne de chargement intègre un ou plusieurs capteur(s) et/ou détecteur(s) 16 apte(s) et destiné(s) à relever et/ou à mesurer au moins un paramètre physique, climatique et/ou chimique local au niveau du lieu d'installation ou d'implantation de la borne 2 considérée, par exemple un ou plusieurs paramètre(s) choisis dans le groupe formé par le taux d'humidité, la hauteur de l'herbe, l'exposition solaire, le degré d'acidité du sol et sa conductivité, la borne 2 concernée délivrant une information correspondante à intervalles réguliers, sur requête et/ou spontanément en cas de mesure d'une valeur dépassant un seuil prédéterminé, soit directement à l'engin 1, soit à une station intermédiaire, apte à communiquer avec ce dernier.

La borne de chargement 2 peut ainsi éventuellement intégrer au moins certaines des fonctionnalités du module capteur décrit dans la demande de brevet français déposée le 9 novembre 2015 au nom de la demanderesse sous le n° 1560703, en particulier en ce qui concerne le(s) capteur(s) ou détecteur(s) 16.

L'invention concerne aussi un système de traitement automatique ou automatisé du sol ou d'une surface 3, en particulier de tonte automatisée, comprenant, d'une part, un engin 1 du type robot mobile de traitement du sol 3 ou d'une surface, en particulier de tonte, et d'autre part, au moins un moyen de délimitation d'au moins une zone à traiter ou à tondre, déterminant le périmètre de ladite ou de chacune desdites zone(s).

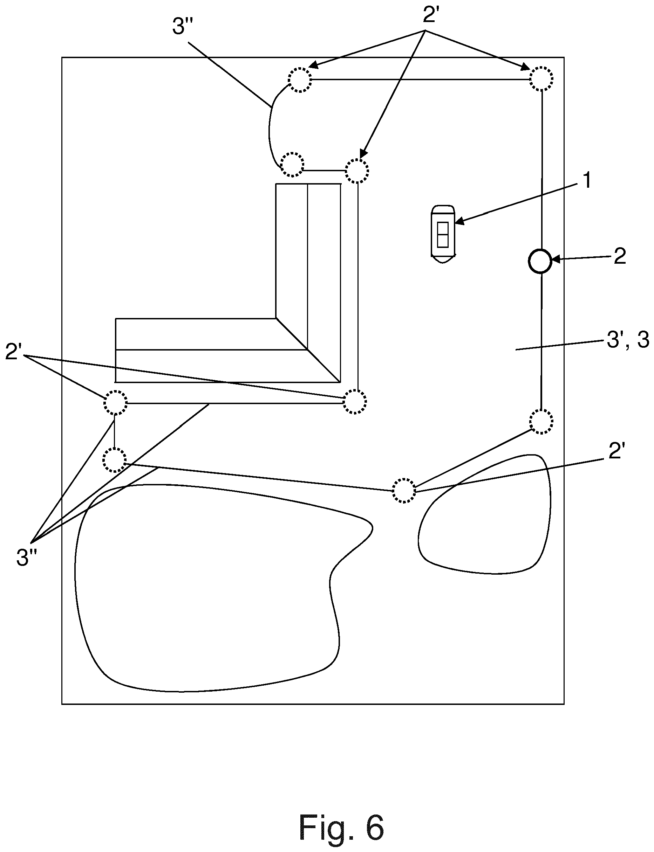

Ce système de traitement, représenté schématiquement sur la figure 6, comprend, selon l'invention, au moins une borne de chargement 2 formant avec le robot 1 un système de chargement tel que décrit précédemment, ladite borne de chargement 2 participant ou non à la définition d'une zone à traiter, en relation avec un fil périmétrique ou d'autres bornes individuelles de délimitation.

En accord avec une réalisation pratique avantageuse, la borne 2 peut aussi constituer un moyen de délimitation locale de la zone 3' à traiter par l'engin 1, apte et destiné à coopérer avec d'autres bornes actives individuelles 2' de délimitation et/ou de localisation du périmètre 3" de ladite zone 3'.

Selon une caractéristique additionnelle ou une variante de réalisation, la borne de chargement 2 peut intégrer des moyens d'interfaçage avec l'utilisateur et de programmation de l'engin 1, et éventuellement des autres bornes actives 2' participant à la délimitation de la zone 3' à traiter, ladite borne de chargement 2 constituant ainsi une station intermédiaire apte à communiquer par voie radiofréquence avec ces autres bornes 2' et avec l'engin 1.

Par ailleurs, l'invention porte également sur une borne de chargement à accès circonférentiel pour l'alimentation d'engins autonomes du type robots de traitement (par exemple de nettoyage) ou de tonte, caractérisé en ce qu'elle consiste en une borne 2 telle que décrite précédemment.

Bien entendu, l'invention n'est pas limitée au mode de réalisation décrit et représenté aux dessins annexés. Des modifications restent possibles, notamment du point de vue de la constitution des divers éléments sans sortir pour autant du domaine de protection de l'invention.

## Revendications

1. Borne de chargement à accès circonférentiel pour l'alimentation d'engins autonomes du type robots de traitement ou de tonte , **caractérisée en ce qu'**elle comporte une enveloppe ou un boîtier de protection (7) présentant, au moins au niveau de la région de la première paire de terminaux (4, 4'), une forme extérieure de révolution , chacun des terminaux (4 et 4') de la première paire présentant une forme extérieure sensiblement circulaire et s'étendant circonférentiellement en étant proéminent, affleurant ou en retrait par rapport à la surface extérieure de ladite enveloppe ou dudit boîtier (7), pour une accessibilité sur 360°.

2. Système de chargement électrique d'un engin autonome (1), en particulier d'un robot mobile de traitement automatisé du sol, tel qu'un robot de tonte, ce système comprenant, d'une part, au moins une borne selon la revendication 1 de chargement fixe par rapport au sol, et pourvue d'une première paire de terminaux d'alimentation aptes et destinés à délivrer de l'énergie électrique avec un courant et une tension compatibles avec l'engin à charger et, d'autre part, une seconde paire de terminaux d'alimentation faisant partie de l'engin, reliés directement ou non à un moyen de stockage d'énergie électrique embarqué et arrangés selon une disposition coïncidant avec celle de la première paire de terminaux, le transfert d'énergie électrique s'effectuant par double contact entre les terminaux respectivement correspondants des deux paires, **caractérisé en ce que** la ou chaque borne de chargement (2) comporte une enveloppe ou un boîtier de protection (7) présentant, au moins au niveau de la région de la première paire de terminaux (4, 4'), une forme extérieure de révolution, **en ce que** chacun des terminaux (4 et 4') de la première paire présente une forme extérieure sensiblement circulaire et s'étend circonférentiellement en étant proéminent, affleurant ou en retrait par rapport à la surface extérieure de ladite enveloppe ou dudit boîtier (7), pour une accessibilité sur 360°, et **en ce que** la seconde paire de terminaux d'alimentation (5, 5') est montée, préférentiellement de manière apparente et accessible directement de l'extérieur, dans le capot ou la coque d'habillage (8) de l'engin (1).

3. Système de chargement selon la revendication 2, **caractérisé en ce que** les terminaux (4, 4' ; 5, 5') de la première et/ou de la seconde paire(s) sont montés sous sollicitation élastique, de manière à autoriser notamment un déplacement relatif entre les deux terminaux (4 et 4' ; 5 et 5') d'une même paire et garantir l'établissement d'un double contact avec les terminaux de l'autre paire en vue du chargement.

4. Système de chargement selon l'une quelconque des revendications 2 et 3, **caractérisé en ce que** les profils extérieurs, d'une part, de l'enveloppe ou du boîtier de protection (7) de la ou chaque borne de chargement (2) et, d'autre part, du capot ou de la coque d'habillage (8) de l'engin (1) présentent, au moins au niveau de leurs zones ou régions pourvues des terminaux (4, 4' ; 5, 5'), des formes sensiblement mutuellement conjuguées ou assorties par complémentarité, autorisant un rapprochement suffisant, par approche latérale de l'engin (1) roulant sur le sol (3) et s'autoguidant par rapport à la borne (2), entre la borne (2) considérée et l'engin (1) pour permettre l'établissement du double contact entre les terminaux (4, 4' ; 5, 5') des deux paires.

5. Système de chargement selon l'une quelconque des revendications 2 à 4, **caractérisé en ce que** la partie (9) de l'enveloppe ou du boîtier de protection (7) de la ou chaque borne de chargement (2) recevant la première paire de terminaux (4, 4') présente une configuration extérieure effilée vers le bas, avec préférentiellement un bord supérieur (7') en surplomb par rapport auxdits terminaux (4, 4') et **en ce que** le terminal inférieur (4') est situé en retrait par rapport au terminal supérieur (4).

6. Système de chargement selon l'une quelconque des revendications 2 à 5, **caractérisé en ce que** chaque terminal (4, 4') de la première paire de terminaux (4 et 4') consiste en une pièce annulaire, préférentiellement du type rondelle métallique plate, en une ou plusieurs parties (4"), et **en ce que** chaque terminal (4, 4') de cette première paire est monté avec un maintien centré par rapport à l'axe de révolution (AR) de l'enveloppe ou du boîtier (7) sous l'action de moyens élastiques (10), par exemple de trois ressorts de traction ou de compression, reliant chaque terminal (4, 4') à un élément central fixe (11) avec faculté de déplacement dans un plan horizontal ou plan (P, P') de la pièce annulaire considérée (4, 4').

7. Système de chargement selon l'une quelconque des revendications 2 à 6, **caractérisé en ce que** chaque terminal (3, 3') de la seconde paire de terminaux (5, 5') consiste en une bande métallique montée sensiblement affleurante, proéminente ou en retrait par rapport à la surface extérieure (8') du capot ou de la coque d'habillage (8) de l'engin (1), préférentiellement avec réalisation d'une étanchéité à l'eau et éventuellement avec faculté de rétraction ou d'enfoncement à l'encontre d'une sollicitation élastique, par exemple fournie par des ressorts de compression (12), un moyen de recouvrement extérieur escamotable étant le cas échéant prévu.

8. Système de chargement selon l'une quelconque des revendications 2 à 7, **caractérisé en ce que** l'enveloppe ou le boîtier de protection (7) de la ou chaque borne (2) comprend une partie supérieure (9) comportant la première paire de terminaux (4, 4') et un module électronique (13) de gestion de l'alimentation et une partie inférieure (9') destinée à être enfoncée dans le sol (3) et se terminant avantageusement en pointe, ledit module électronique (13) de la borne (2) considérée étant relié au réseau ou à un module transformateur par une ligne d'alimentation (14), préférentiellement enterrée et passant par la partie inférieure (9') plantée dans le sol (3).

9. Système de chargement selon l'une quelconque des revendications 2 à 8, **caractérisé en ce que** la ou chaque borne de chargement (2) intègre des moyens d'émission et de réception radio (15), aptes et destinés à établir une communication bidirectionnelle entre la borne (2) concernée, d'une part, et l'engin (1), au moins une autre borne et/ou un outil portatif de géolocalisation, équipé(e) de moyens complémentaires, d'autre part.

10. Système de chargement selon la revendication 9, **caractérisé en ce que** les moyens d'émission et de réception radio (15) comprennent des moyens de diffusion de signaux sur une portée limitée, dont la simple détection par l'engin mobile autonome (1) ou leur éventuelle interprétation après réception par ce dernier, indique audit engin (1) une zone fractionnaire à traiter prioritairement, à traiter de manière particulière, à éviter, interdite d'accès ou ne devant pas être traitée.

11. Système de chargement selon l'une quelconque des revendications 2 à 10, **caractérisé en ce que** la ou chaque borne de chargement intègre un ou plusieurs capteur(s) et/ou détecteur(s) (16) apte(s) et destiné(s) à relever et/ou à mesurer au moins un paramètre physique, climatique et/ou chimique local au niveau du lieu d'installation ou d'implantation de la borne (2) considérée, par exemple un ou plusieurs paramètre(s) choisis dans le groupe formé par le taux d'humidité, la hauteur de l'herbe, l'exposition solaire, le degré d'acidité du sol et sa conductivité, la borne (2) concernée délivrant une information correspondante à intervalles réguliers, sur requête et/ou spontanément en cas de mesure d'une valeur dépassant un seuil prédéterminé, soit directement à l'engin (1), soit à une station intermédiaire, apte à communiquer avec ce dernier.

12. Système de traitement automatisé du sol ou d'une surface, en particulier de tonte automatisée, comprenant, d'une part, un engin du type robot mobile de traitement du sol ou d'une surface, en particulier de tonte, et d'autre part, au moins un moyen de délimitation d'au moins une zone à traiter ou à tondre, déterminant le périmètre de ladite ou de chacune desdites zone(s), **caractérisé en ce qu'**il comprend au moins une borne de chargement (2) formant avec le robot (1) un système de chargement selon l'une quelconque des revendications 2 à 11, ladite borne de chargement (2) participant ou non à la définition d'une zone à traiter, en relation avec un fil périmétrique ou d'autres bornes individuelles de délimitation.

13. Système de traitement selon la revendication 12, **caractérisé en ce que** la borne de chargement (2) constitue un moyen de délimitation locale de la zone (3') à traiter par l'engin (1), apte et destiné à coopérer avec d'autres bornes actives individuelles (2') de délimitation et/ou de localisation du périmètre (3") de ladite zone (3').

14. Système de traitement selon la revendication 12 ou 13, **caractérisé en ce que** la borne de chargement (2) intègre des moyens d'interfaçage avec l'utilisateur et de programmation de l'engin (1), et éventuellement des autres bornes actives (2') participant à la délimitation de la zone (3') à traiter, ladite borne de chargement (2) constituant ainsi une station intermédiaire apte à communiquer par voie radiofréquence avec ces autres bornes (2') et avec l'engin (1).

## Patentansprüche

1. Ladestation mit umfänglichem Zugang zur Versorgung von autonomen Maschinen des Typs Bearbeitungs- oder Mähroboter, **dadurch gekennzeichnet, dass** sie eine Schutzumhüllung oder ein Schutzgehäuse (7) umfasst, die/das zumindest im Bereich des ersten Anschlusspaares (4, 4') eine externe Rotationsform aufweist, bei dem jeder der Anschlüsse (4 und 4') des ersten Paares eine im Wesentlichen kreisförmige Außenform aufweist und sich in Umfangsrichtung erstreckt, wobei er gegenüber der Außenfläche der Umhüllung oder des Gehäuses (7) vorstehend, bündig oder zurückgesetzt ist, um eine 360°-Zugänglichkeit zu gewährleisten.

2. Elektrisches Ladesystem für eine autonome Maschine (1), insbesondere einen mobilen Roboter zur automatisierten Bodenbearbeitung, wie beispielsweise einen Mähroboter, welches System einerseits mindestens eine bezüglich des Untergrunds feste Ladestation nach Anspruch 1 umfasst, die mit einem ersten Paar von Stromversorgungsanschlüssen versehen ist, die geeignet und dazu bestimmt sind, elektrische Energie zu liefern mit einer Stromstärke und einer Spannung, die mit der zu ladenden Maschine kompatibel sind, und andererseits ein zweites Paar von Stromversorgungsanschlüssen, die Teil der Maschine sind, die direkt mit einem mitgeführten elektrischen Energiespeichermittel verbunden sind oder nicht und die in einer Weise angeordnet sind, die mit derjenigen des erstes Anschlusspaars übereinstimmt, wobei die Übertragung der elektrischen Energie erfolgt durch Doppelkontakt zwischen den jeweiligen entsprechenden Anschlüssen der beiden Paare,
**dadurch gekennzeichnet, dass** die oder jede Ladestation (2) eine Schutzumhüllung oder ein Schutzgehäuse (7) umfasst, die oder das zumindest im Bereich des ersten Paares von Anschlüssen (4, 4') eine äußere Rotationsform aufweist, dass jeder der Anschlüsse (4 und 4') des ersten Paares eine im Wesentlichen kreisförmige äußere Form aufweist und sich in Umfangsrichtung erstreckt, wobei er in Bezug auf die Außenfläche der Umhüllung oder des Gehäuses vorstehend, bündig oder vertieft ist, für eine 360°-Zugänglichkeit, und dass das zweite Paar von Stromversorgungsanschlüssen (5, 5'), vorzugsweise sichtbar und direkt von außen zugänglich, im Deckel oder im Gehäusemantel (8) der Maschine (1) montiert ist.

3. Ladesystem nach Anspruch 2, **dadurch gekennzeichnet, dass** die Anschlüsse (4, 4'; 5, 5') des ersten und/oder des zweiten Paares elastisch montiert sind, sodass eine Relativbewegung zwischen den beiden Anschlüssen (4 und 4'; 5 und 5') eines selben Paares möglich ist und die Herstellung eines Doppelkontakts mit den Anschlüssen des anderen Paares zum Laden gewährleistet ist.

4. Ladesystem nach einem der Ansprüche 2 und 3, **dadurch gekennzeichnet, dass** die äußeren Profile einerseits des Schutzgehäuses oder der Schutzumhüllung (7) der oder jeder Ladestation (2) und andererseits des Deckels oder des Gehäusemantels (8) der Maschine (1) zumindest in ihren mit Anschlüssen (4, 4'; 5, 5') versehenen Anschnitten oder Bereichen Formen aufweisen, die im Wesentlichen zueinander passend oder komplementär angepasst sind, um eine ausreichende Annäherung durch seitliches Annähern der Maschine (1), die auf dem Untergrund (3) fährt und sich in Bezug auf die Station (2) selbst führt, zwischen der betreffenden Station (2) und der Maschine (1) zu ermöglichen, um die Ausbildung des Doppelkontakts zwischen den Anschlüssen (4, 4'; 5, 5') der beiden Paare zu ermöglichen.

5. Ladesystem gemäß einem der Ansprüche 2 bis 4, **dadurch gekennzeichnet, dass** der Teil (9) der Schutzumhüllung oder des Schutzgehäuses (7) der oder jeder Ladestation (2), der das erste Anschlusspaar (4, 4') aufnimmt, eine sich nach unten verjüngende externe Konfiguration aufweist, vorzugsweise mit einem oberen Rand (7'), der in Bezug auf die Anschlüsse (4, 4') vorkragt, und dass der untere Anschluss (4') gegenüber dem oberen Anschluss (4) zurückgesetzt angeordnet ist.

6. Ladesystem nach einem der Ansprüche 2 bis 5, **dadurch gekennzeichnet, dass** jeder Anschluss (4, 4') des erstes Anschlusspaares (4 und 4') gebildet ist aus einem Ringteil, vorzugsweise vom Typ einer flachen Metallscheibe, aus einem Einzelteil oder mehreren Einzelteilen (4"), und dass jeder Anschluss (4, 4') dieses ersten Paares montiert ist mit einem zentrierten Halt in Bezug auf die Rotationsachse (AR) der Umhüllung oder des Gehäuses (7) unter Einwirkung von elastischen Mitteln (10), beispielsweise von drei Zug- oder Druckfedern, die jeden Anschluss (4, 4') mit einem festen Mittelelement (11) verbinden mit der Möglichkeit einer Bewegung in einer horizontalen Ebene oder in einer Ebene (P, P') des betreffenden Ringteils (4, 4').

7. Ladesystem nach einem der Ansprüche 2 bis 6, **dadurch gekennzeichnet, dass** jeder Anschluss (3, 3') des zweiten Anschlusspaares (5, 5') aus einem Metallstreifen gebildet ist, der bezüglich der Außenfläche (8') des Deckels oder des Gehäusemantels (8) der Maschine (1) im Wesentlichen bündig, hervorstehend oder zurückgesetzt montiert ist, vorzugsweise mit einer wasserfesten Abdichtung und gegebenenfalls mit einer Rückzug- und Eindrück-Möglichkeit gegenüber elastischer Beaufschlagung, z. B. durch Vorsehen von Druckfedern (12), wobei gegebenenfalls eine einschiebbare oder einziehbare Außenverkleidung vorgesehen ist.

8. Ladesystem nach einem der Ansprüche 2 bis 7, **dadurch gekennzeichnet, dass** die Schutzumhüllung oder das Schutzgehäuse (7) der oder jeder Station (2) ein Oberteil (9) aufweist, welches das erste Paar von Anschlüssen (4, 4') und ein elektronisches Leistungsmanagementmodul (13) umfasst, und ein Unterteil (9'), das dazu bestimmt ist, in den Untergrund (3) eingedrückt zu werden und vorteilhafterweise in einer Spitze endet, wobei das elektronische Modul (13) der betreffenden Station (2) mit dem Stromnetz oder mit einem Transformatormodul über eine Versorgungsleitung (14) verbunden ist, vorzugsweise unterirdisch und durch das in den Untergrund (3) eingedrückte Unterteil (9').

9. Ladesystem nach einem der Ansprüche 2 bis 8, **dadurch gekennzeichnet, dass** die oder jede Ladestation (2) Funk-Sende- und -Empfangsmittel (15) umfasst, die geeignet und dazu bestimmt sind, eine bidirektionale Kommunikation herzustellen zwischen der betreffenden Station (2) einerseits und andererseits der Maschine (1), mindestens einer anderen Station und/oder einem tragbaren Geolokalisierungswerkzeug, die/das mit komplementären Mitteln ausgestattet ist.

10. Ladesystem nach Anspruch 9, **dadurch gekennzeichnet, dass** die Funk-Sende- und Empfangsmittel (15) Mittel zur Übertragung von Signalen über eine begrenzte Reichweite umfassen, deren einfache Erfassung durch die autonome mobile Maschine (1) oder deren mögliche Interpretation durch diese nach dem Empfang der Maschine (1) eine Teilfläche anzeigt, die prioritär zu bearbeiten ist, die in besonderer Weise zu bearbeiten ist, die zu vermeiden ist, zu welcher der Zugang verboten ist, oder die nicht bearbeitet werden darf.

11. Ladesystem nach einem der Ansprüche 2 bis 10, **dadurch gekennzeichnet, dass** die oder jede Station einen oder mehrere Sensor(en) und/oder Detektor(en) (16) umfasst, die geeignet und dazu bestimmt ist/sind, mindestens einen lokalen physikalischen, klimatischen und/oder chemischen Parameter am Ort der Installation oder Aufstellung der betreffenden Station (2) zu erfassen und/oder zu messen, beispielsweise einen oder mehrere Parameter ausgewählt aus der Gruppe, die sich zusammensetzt aus dem Feuchtigkeitsgehalt, der Höhe des Rasens, der Sonneneinstrahlung, dem Säuregrad des Bodens und seiner Leitfähigkeit, wobei die Station (2) entsprechende Informationen liefert in regelmäßigen Abständen, auf Anforderung und/oder spontan bei einer Messung eines Wertes, der einen vorgegebenen Schwellenwert überschreitet, entweder direkt an die Maschine (1) oder an eine Zwischenstation, die mit letzterer kommunizieren kann.

12. Automatisiertes Boden- oder Oberflächenbearbeitungssystem, insbesondere zum automatisierten Mähen, umfassend einerseits eine Maschine vom Typ eines mobilen Roboters zum Bearbeiten des Bodens oder einer Oberfläche, insbesondere zum Mähen, und andererseits mindestens ein Mittel zum Begrenzen mindestens eines zu bearbeitenden oder zu mähenden Bereichs, zum Bestimmen des Umfangs dieses oder jedes des genannten Bereichs oder der genannten Bereiche,
**dadurch gekennzeichnet, dass** es mindestens eine Ladestation (2) umfasst, die mit dem Roboter (1) ein Ladesystem nach einem der Ansprüche 2 bis 11 bildet, wobei die Ladestation (2) entweder an der Definition eines zu bearbeitenden Bereichs beteiligt ist oder nicht, in Verbindung mit einem Begrenzungsdraht oder anderen individuellen Grenzmarken.

13. Bearbeitungssystem nach Anspruch 12, **dadurch gekennzeichnet, dass** die Ladestation (2) ein Mittel zur lokalen Abgrenzung des durch die Maschine (1) zu bearbeitenden Bereichs (3') darstellt, das geeignet und dazu bestimmt ist, mit anderen individuellen aktiven Grenzmarken (2') zum Abgrenzen und/oder zum Lokalisieren des Umfangs (3") des Bereichs (3') zusammenzuwirken.

14. Bearbeitungssystem nach Anspruch 12 oder 13, **dadurch gekennzeichnet, dass** die Ladestation (2) Mittel umfasst zur Schnittstellenbildung mit dem Benutzer und zur Programmierung der Maschine (1) und gegebenenfalls anderer aktiver Grenzmarken (2'), die an der Begrenzung des zu bearbeitenden Bereichs (3') beteiligt sind, wobei die Ladestation (2) somit eine Zwischenstation bildet, die per Funk mit diesen anderen Grenzmarken (2') und mit der Maschine (1) kommunizieren kann.

## Claims

1. Charging terminal with circumferential access for supplying power to autonomous vehicles of processing or clipping robot type, **characterized in that** it comprises an enclosure or a protection housing (7) having, at least in the region of the first pair of terminals (4, 4'), an outer form of revolution, each of the terminals (4 and 4') of the first pair having a substantially circular outer form and extending circumferentially by being prominent, flush with or setback from the outer surface of said enclosure or said housing (7), for accessibility over 360°.

2. Electric charging system for an autonomous vehicle (1), in particular a mobile robot for automated treatment of the ground, such as a clipping robot, this system comprising, on the one hand, at least a charging terminal according to Claim 1 that is fixed relative to the ground, and provided with a first pair of power supply terminals capable of delivering and intended to deliver electrical energy with a current and a voltage that are compatible with the vehicle to be charged and, on the other hand, a second pair of power supply terminals forming part of the vehicle, linked directly or not to an embedded electrical energy storage means and arranged according to a disposition coinciding with that to the first pair of terminals, the transfer of electrical energy being effected by double contact between the respectively corresponding terminals of the two pairs, **characterized in that** the or each charging terminal (2) comprises an enclosure or a protection housing (7) having, at least in the region of the first pair of terminals (4, 4'), an outer form of revolution, **in that** each of the terminals (4 and 4') of the first pair has a substantially circular outer form and extends circumferentially by being prominent, flush with or setback from the outer surface of said enclosure or said housing (7), for accessibility over 360°, **in that** the second pair of power supply terminals (5, 5') is mounted preferentially in a way that is visible and directly accessible from the outside, in the cowl or the cladding shell (8) of the vehicle (1).

3. Charging system according to Claim 2, **characterized in that** the terminals (4, 4'; 5, 5') of the first and/or of the second pair(s) are mounted under elastic strain, so as to allow in particular a relative movement between the two terminals (4 and 4'; 5 and 5') of one and the same pair and guarantee the creation of a double contact with the terminals of the other pair for the charging.

4. Charging system according to either one of Claims 2 and 3, **characterized in that** the outer profiles, on the one hand, of the enclosure or of the protection housing (7) of the or each charging terminal (2) and, on the other hand, of the cowl or of the cladding shell (8) of the vehicle (1) have, at least in their zones or regions provided with the terminals (4, 4'; 5, 5'), forms substantially mutually twinned or matched by complementarity, allowing a sufficient convergence, by lateral approach of the vehicle (1) rolling on the ground (3) and being selfguided relative to the terminal (2), between the terminal (2) concerned and the vehicle (1) to allow the establishment of the double contact between the terminals (4, 4'; 5, 5') of the two pairs.

5. Charging system according to any one of Claims 2 to 4, **characterized in that** the part (9) of the enclosure or of the protection housing (7) of the or each charging terminal (2) receiving the first pair of terminals (4, 4') have a downward-tapered outer configuration, with preferentially a top edge (7') overhanging relative to said terminals (4, 4') and **in that** the bottom terminal (4') is situated setback relative to the top terminal (4).

6. Charging system according to any one of Claims 2 to 5, **characterized in that** each terminal (4, 4') of the first pair of terminals (4 and 4') consists of an annular piece, preferentially of the flat metal washer type, in one or more parts (4"), and **in that** each terminal (4, 4') of this first pair is mounted with a catch that is centred relative to axis of revolution (AR) of the enclosure or of the housing (7) under the action of elastic means (10), for example three traction or compression springs, linking each terminal (4, 4') to a fixed central element (11) with movement capability in a horizontal or flat plane (P, P') of the annular piece concerned (4, 4').

7. Charging system according to any one of Claims 2 to 6, **characterized in that** each terminal (3, 3') of the second pair of terminals (5, 5') consists of a metal strip mounted substantially flush, prominent or setback relative to the outer surface (8') of the cowl or of the cladding shell (8) of the vehicle (1), preferentially with the production of a water-tight seal and possibly with capability for retraction or depression against an elastic strain, for example supplied by compression springs (12), a retractable outer covering means being provided if necessary.

8. Charging system according to any one of Claims 2 to 7, **characterized in that** the enclosure or the protection housing (7) of the or each terminal (2) comprises a top part (9) comprising the first pair of terminals (4, 4') and an electronic module (13) for managing the power supply and a bottom part (9') intended to be driven into the ground (3) and advantageously being terminated with a spike, said electronic module (13) of the terminal (2) concerned being linked to the network or to a transformer module by a power supply line (14), preferably buried and passing through the bottom part (9') planted into the ground (3).

9. Charging system according to any one of Claims 2 to 8, **characterized in that** the or each charging terminal (2) incorporates radio transmission and reception means (15), capable of establishing and intended to establish a two-way communication between the terminal (2) concerned, on the one hand, and the vehicle (1), at least one other terminal and/or a handheld geolocation tool, equipped with complementary means on the other hand.

10. Charging system according to Claim 9, **characterized in that** the radio transmission and reception means (15) comprise means for broadcasting signals over a limited range, the simple detection of which by autonomous mobile vehicle (1) or the possibly interpretation thereof after reception thereby, indicates to said vehicle (1) a fractional zone to be treated as a priority, to be treated in a particular manner, to be avoided, for access to be prohibited or that must not be treated.

11. Charging system according to any one of Claims 2 to 10, **characterized in that** the or each charging terminal incorporates one or more sensor(s) and/or detector(s) (16) capable of reading and/or measuring, and intended to record and/or measure, at least one physical, climatic and/or local chemical parameter at a place of installation or of implantation of the terminal (2) concerned, for example one or more parameter (s) chosen from the group formed by the moisture content, grass height, exposure to the sun, the degree of acidity of the ground and its conductivity, the terminal (2) concerned delivering corresponding information at regular intervals, on request and/or spontaneously in the event of a value being measured that exceeds a predetermined threshold, either directly to the vehicle (1), or to an intermediate station, capable of communicating with the latter.

12. System for automated treatment of the ground or of a surface, in particular automated clipping, comprising, on the one hand, a vehicle of the mobile robot type for treating the ground or a surface, in particular clipping, and on the other hand, at least one means for delimiting at least one zone to be treated or to be clipped, determining the parameter of said or of each of said zone(s), **characterized in that** it comprises at least one charging terminal (2) forming, with the robot (1), a charging system according to any one of Claims 2 to 11, said charging terminal (2) participating or not in the definition of a zone to be treated, in relation to a perimeter wire or other individual delimiting terminals.

13. Treatment system according to Claim 12, **characterized in that** the charging terminal (2) constitutes a local means for delimiting the zone (3') to be treated by the vehicle (1), capable of cooperating and intended to cooperate with other individual active terminals (2') for delimiting and/or locating the perimeter (3") of said zone (3').

14. Treatment system according to Claim 12 or 13, **characterized in that** the charging terminal (2) incorporates means for interfacing with the user and for programming the vehicle (1), and possibly other active terminals (2') participating in the delimiting of the zone (3') to be treated, said charging terminal (2) thus constituting an intermediate station capable of communicating by radio frequency channel with these other terminals (2') and with the vehicle (1).
